Europäisches Patentamt

European Patent Office

Office européen des brevets

(19)

(11) Publication number: **0 231 067 B1**

## EUROPEAN PATENT SPECIFICATION

(12)

(45) Date of publication of patent specification: **22.07.92** (51) Int. Cl.⁵: **G03B 27/20**

(21) Application number: **87300217.4**

(22) Date of filing: **12.01.87**

(54) **Photography pin board system.**

(30) Priority: **30.01.86 US 824208**

(43) Date of publication of application:
**05.08.87 Bulletin 87/32**

(45) Publication of the grant of the patent:
**22.07.92 Bulletin 92/30**

(84) Designated Contracting States:
**AT BE CH DE FR GB IT LI NL SE**

(56) References cited:
**EP-A- 0 042 136      DE-A- 2 437 596**
**US-A- 3 463 586      US-A- 3 634 009**
**US-A- 3 771 870      US-A- 4 504 142**

(73) Proprietor: **Richards, Chester L.**
**100 Meadowbrook Place**
**Cheshire Connecticut 06410(US)**

(72) Inventor: **Richards, Chester L.**
**100 Meadowbrook Place**
**Cheshire Connecticut 06410(US)**

(74) Representative: **Arthur, George Fitzgerald et al**
**KILBURN & STRODE 30, John Street**
**London WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to photographic printing, and more particularly to an improved pin board alignment system for use with contact printing frames.

U.S. patent no. 4,504,142 describes a vacuum printing frame for holding a stacked mask and film for photographic prints. Inflatable bladders apply pressure to a pressure blanket which pushes the mask/film stack against the underside of the glass top of the frame. The air between the mask and the film is squeezed out with complete control leaving the film and mask in fully intimate contact.

The present invention was conceived to improve upon the existing methods of aligning the mask and film when precision registration between the two is required. The new invention can take advantage of the bladder air squeezing described in the above specification, but the invention will also work with other types of vacuum frame.

Contact photographic printing, especially of colour separations, often requires high precision alignment between the masks and the various pieces of sensitive film to be printed. The method commonly used in achieving this alignment is to punch holes in the mask and the film and place alignment pins through these holes. Two alignment pins are required for complete restriction of the relative position between the mask and the film.

There are two pin alignment techniques commonly in use. Both require a precision two-hole punch which is used to put identically spaced holes in both the mask and the film. The older alignment system uses a pin board with fixed pins spaced at the same distance as the punches in the precision, two-hole punch device. The punched film is laid down first on the fixed pin board. The mask is laid down on top of the film. The pins from the board pass through both the film and the mask to provide a reference for alignment. Additional registration holes and pins may be utilised for better control.

Once the photographic exposure is made and the film is developed, the film and mask may again be brought into precise alignment by placing both on a reference pin board. Moreover, all pieces of film which have been punched and aligned and exposed using this pin board will automatically be mutually aligned.

This traditional pin board arrangement has two significant technical difficulties. First, film expands and contracts, under thermal and humidity change, by a different amount than the pin board. Thus, there are practical difficulties in maintaining mask/film alignment under conditions which are found in the normal working environment. Second, because the tops of the alignment pins project substantially above the top surface of the mask sheet, this type of pin board is not suitable for use with vacuum contact frames. The reason for this is that for contact printing, the mask and photofilm must be pressed in firm contact with the lower surface of a glass top plate of the vacuum frame. The projecting pin ends of the traditional pin board prevent this intimate contact.

For these reasons, a second kind of pin alignment system, which uses floating pins, has been developed for the mask/film stack. In place of fixed pins, holes are drilled through the board. The holes are somewhat larger in diameter than the alignment pins so that these pins float freely in the holes. The pins are inserted from the backside and are usually taped in place.

The pin used with this system is the standard, free pin which consists of a flat ended metal cylinder welded to a thin flat plate, which caps one end of the cylinder. The flat cap plate is about one inch square. In cross section the combination resembles an inverted "T". The flat plate permits the pin to be taped down onto any convenient flat surface.

In use, the film and mask sheets are punched with the same precision punch, which puts at least two alignment holes in each of the sheets. With pins pressed through the adjacent holes in the two sheets, the sheets of the mask/film stack are kept in alignment so that the pin board does not have to act as a position reference. Thus, the pins may float in the holes in the pin board. The advantage of this approach is that, since the mask and the film are made of the same material, their expansion coefficients are the same and relative alignment is maintained over a wide range of environmental conditions.

The disadvantage of this commonly used type of floating pin board is that there is a substantial clumsiness which occurs when the board is used in a vacuum frame. This clumsiness occurs because the alignment pins are adhesively taped to the backside of the pin board. Each time the board assembly is used in the vacuum frame the adhesive holding tape is dislodged and the alignment pins are knocked loose. Thus, the pins must be retaped in place with each setup. This, it turns out, consumes substantial time. For this reason innovators in the graphic arts industry have been designing alternative types of pin boards.

US 3 463 586 discusses a pin board wherein art work is held rigidly by pins to be aligned with a film some distance away in a camera.

The problem of achieving the necessary alignment stability, together with convenience of use, is not an easy one to solve.

What is needed is a pin board which has some flexing capability so that as the bladders in the quick pull frame are inflated, the board conformly flexes to progressively squeeze out the air from the mask/film sandwich. The present invention solves these problems, as well as several others.

The basic solution for pin alignment results from adoption of the relative alignment, free floating pin system described above as the second basic type of pin board arrangement. One important, and non-obvious, novelty introduced by this invention is the notion that the adhesive tape, which is normally used to hold the free pins to the back of the pin board, may be replaced by an elastic sheet material. The elastic sheet is bonded to the back side of a free floating type of pin board. However, the region of the elastic sheet immediately surrounding each of the pin holes is left free of bonding material. These "free regions" form pockets which contain the alignment pins. The pins are, as a result, free to "float" back and forth in the loose tolerance holes or apertures so that the mask and film can act as mutual alignment masters for each other. The primary function of the elastic backing sheet is to act as a spring return device.

A pin is permitted, by the elastic backing sheet, to yield to pressure on its top. The pin is forced downward and presses against and stretches the elastic sheet. When the pressure is released, the stretched elastic sheet provides a restoring force which causes the pin to move back into its original position. The result is that the floating pin acts as if it were spring loaded.

The elastic backing sheet yields to downward pressure on the pins in such a way that when the assembly is pressed against the glass top plate of the vacuum frame the pins are pressed down flush with the top surface of the mask sheet. In normal operation, the displacement of the pins in a downward direction is absorbed by the flexible nature of the vacuum blanket which forms the bottom wall of the vacuum chamber. In alternative embodiments, a thick, resilient backing elastic sheet could be used to absorb the downward motion of the pins entirely within its volume.

To help retain the pins in a vertical orientation, parallel to the axis of the aperture in the pin board, a metal plate that is larger than the pin cap plate is secured to the elastic sheet to underlie each pin. This backing plate enables proper orientation of the pin and enhances lateral movement of the pin with little or no frictional interference with the elastic sheet.

The top surface of the pin board is pebbled with a fine grain texture so that it may simultaneously provide a precision surface upon which the mask/film sandwich may rest and also provide channels for air to be evacuated from the space between the film and the pin board.

The preferred embodiment of the invention includes an auxiliary board which normally stays connected to the vacuum frame. This auxiliary board has a hole drilled through it which is connected to the vacuum outlet of the vacuum frame. Thus, all the air in the vacuum frame is compelled to pass through this hole in the vacuum port board when the frame is evacuated.

The vacuum port board normally is placed immediately alongside the pin board next to the alignment pins. When the air is evacuated from the frame, both the vacuum port board and the pin board are pressed together against the top glass cover. The vacuum port board also has a pebble textured surface to help air to escape from the region between the top surface of the port and pin boards and glass cover plate.

In addition, in the preferred embodiment, grooves are routed in the top surfaces of the vacuum port board and the pin board so as to provide channels for air passage. The grooves in the two boards are mated at the junction between the two boards in such a way that there is a clear air passage from the location of the pins in the pin board to the vacuum port in the port board.

The final element of the preferred embodiment of the improved pin board system is a sheet of gasket material. This sheet is substantially larger in size than the combination of the pin board and vacuum port board when the two boards are lying side by side. The excess material of the gasket sheet presses up against the glass cover plate around the edge of the two boards and provides a vacuum seal when air is evacuated through the vacuum port of the port board.

In an alternative embodiment, the gasket sheet, with pin board, assembly is used without requiring a vacuum port board.

The gasket sheet has a vacuum communication hole. When the pin board is placed on the gasket sheet in such a way as to partially cover the vacuum communication hole in the gasket sheet, the hole cannot be sealed off around the edge of the pin board and there will be airflow from the top of the pin board down the edge of the pin baord and into the vacuum communication hole in the gasket sheet. Thus, the gasket sheet is used with a removable pin board which does not have a vacuum port hole and which does not require a separate vacuum port board.

In other alternative embodiments of the invention the pin board may be used by itself in the vacuum frame, the pin board and vacuum port boards may be permanently joined to make a single board, or, either of these three board types may be used without a vacuum gasket sheet.

The invention may be carried into practice in various ways, and one embodiment will be shown by way of example with reference to the accompanying drawings, in which:-

Figure 1 is a perspective view of the major elements of a pin board system according to the present invention;

Figure 2 shows a cross sectional view through the pin board at the location of one of the retracting pins; and

Figure 3 is a similar cross sectional view of the pin board as it would be mounted in an evacuated vacuum frame.

Figure 4 is a copy of Figure 1 of U.S. specification no. 4504142.

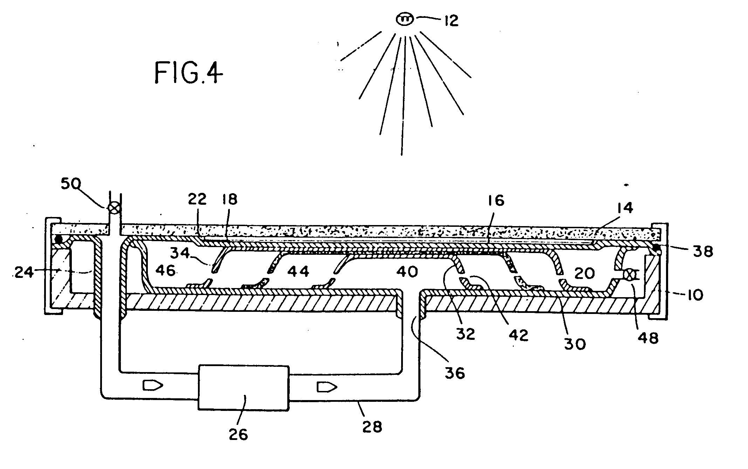

Figure 4 shows a prior proposal of a printing frame 10 having a glass top plate 14, through which light is shone for making a photographic print. A stack 16 of a mask and photographic film has to be held firmly against the underside of the plate 14, and that is achieved by means of a flexible pressure blanket 18 positioned within the frame 10. When the underside of the blanket 18 is pressurised, and the space 22 between the underside of the plate 14 and the upper side of the blanket 18 is evacuated, that result is achieved.

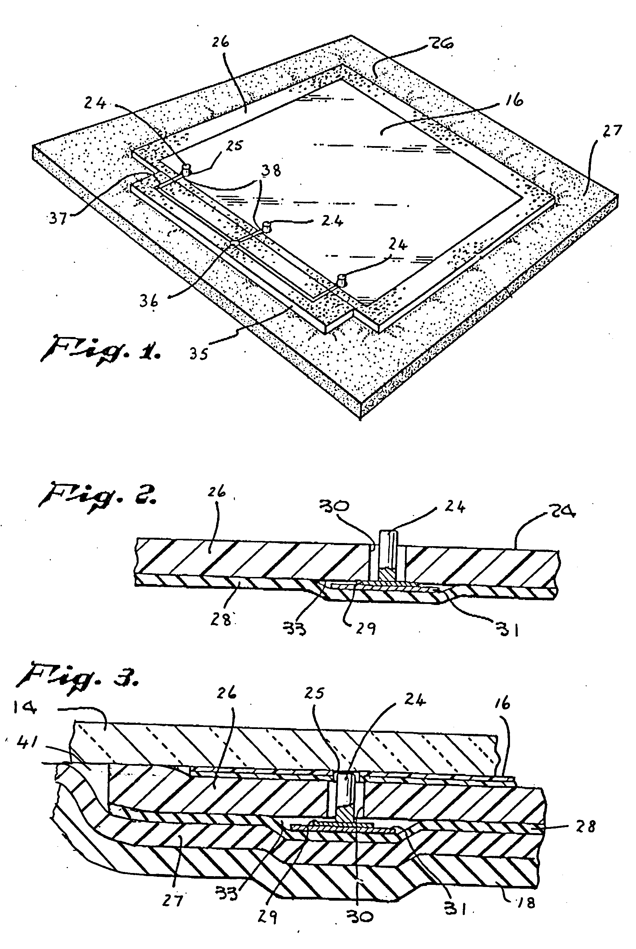

In Figures 1 to 3 illustrating the present invention, only certain components have been illustrated in the interests of simplicity.

The mask and film stack 16 is to be held in intimate contact against the underside of the top plate 14 in the manner shown in Figure 3 with two sheets of the stack being held in registration with each other by means of a number of locating pins 24 passing through aligned holes 25 in the two sheets.

The pins 24 are supported from a board 26 which is thus described as a pin board.

The pressure for holding the sheets together against the underside of the plate 14 is achieved by pressurising the underside of the blanket 18 (Figure 3) through the medium of a gasket sheet 27 which covers, and extends beyond, the entire undersurface of the board 26 as shown in Figure 1.

The pins 24 are held in relation to the board 26 in the manner shown in Figure 2 by virtue of an elastic backing sheet 28 secured to the underside of the board 26 everywhere except in the regions of the pins 24 as can be seen in Figure 2. A capping plate 29 secured at the bottom of each pin 24 bears against the underside of the board 26 and also bears against the upper face of a backing plate 31 carried by the backing sheet 28. The holes 30 in the board 26 for the pins 24 are of larger diameter than the pins so that the pins have freedom of lateral movement in relation to the board sufficient to ensure that the mask and film can be properly aligned.

In the normal position shown in Figure 2, the backing sheet 28 is sufficiently stretched for accommodation of the capping plate and backing plate to define a pocket 33 around the pin between the underside of the board and the backing sheet and to urge the pin upwards so that the capping plate is held against the underside of the board.

The holes 30 could be circular clearance holes or slots or, indeed, could be of the same size and shape as the pins 24 so that the board can itself act as a reference.

When the region above the pressure blanket 18 is evacuated, the pressure of the outside air presses the blanket 18 upwards and that, in turn, presses the gasket sheet 27 upwards against the underside of the board and its backing sheet 28 so that the pin board 26 presses the mask and film stack 16 against the underside of the top plate 14.

Figure 3 shows how, when that occurs, each alignment pin 24 is pushed downwards by the underside of the plate 14 to expand the pocket 33 and deform the gasket sheet 27 and the blanket 18 in the region immediately below the pin. The pin, which rests flush against the bottom surface of the top plate 14 still holds the two sheets of the stack 16 in registration.

The evacuating means is shown in Figure 1 in the form of a vacuum port board 35 of the same material and thickness as the pin board 26 and positioned snugly along one side of the board 26 and above the gasket sheet 27. A vacuum port 36 defined in the board 35 is connected to a vacuum pump and also communicates through grooves 37 in the upper surface of the board 12 with aligned grooves 38 in the upper surface of board 26 to the region of the holes 25 for the pins 24.

Thus, when the vacuum pump is started, air is drawn from the region around the pins 24 so that the mask and film stack 16 is first sucked down onto the pin board 26 at the region of the pins, which provides an initial step of accurately aligning the sheets.

The upper surfaces of the pin board 26 and the vacuum port board 35 have a slightly uneven or pebbled finish to speed up the withdrawal of air from between the underside of the stack and the upper side of the pin board 26.

The gasket sheet 27 is then drawn into intimate contact with the underside of the top plate 14 around the edges of the boards 26 and 35 as is generally indicated in Figure 1, where the gasket sheet is shown as being deformed at the corners of the boards.

There will then be a vacuum chamber 41 between the underside of the plate 14 and the upper face of the gasket sheet 27 and a separate evacuated chamber in the frame around and below the gasket sheet and above the upper surface of the blanket 18. The pressure in the latter chamber may be somewhat higher than the pressure in the upper or inner chamber above the gasket sheet 27. Less air has to be drawn from the interior of the frame than would otherwise be the case, and the vacuum draw time is reduced. the gasket sheet 27 is provided with a hole of the appropriate size for drawing air from the upper inner chamber to below the gasket sheet. The gasket sheet is conveniently a neoprene foam core synthetic rubber of the kind used in wet suits. There may be an upper thin covering membrane of impermeable material such as rubber. The surface might be somewhat porous, provided the pores are small enough to enable them to be squeezed shut when the chamber is evacuated.

For pin boards 26 up to about 20 or 24 inches (50 or 60 cm) square in size, the full vacuum frame assembly of the kind shown in Figure 4 is not necessary.

The gasket sheet should be thick and compressible enough so that when the top plate 14 is brought down, it presses the pin and vacuum port boards into the gasket sheet and makes at least rough contact with the gasket sheet all round the free edges of those boards. The vacuum line will generally pass through a hole in the gasket sheet and make direct connection at 36 with the vacuum port board.

For larger frames, the traditional pressure blanket 18 is useful, because it lifts the pin board assembly up against the top plate 14 and ensures that good contact is made all round the periphery of the board.

In one example, the pin board 26 is of a sheet of plastics material between 0.08 and 0.04 cm thick. The board will be stiff enough to provide firm support for the mask/film stack, while being flexible enough to yield and flex when the vacuum is applied as shown at the left of Figure 3, and this enables a progressive squeezing action to be transmitted to the mask/film stack to effectively squeeze out all the air between the sheets of the stack. A thinner metal board could also be used.

The pin board 26 is made separate from the vacuum port board 35 as described, so that the pin board can be removed from the vacuum frame for mounting and unmounting of the film and the mask, leaving the vacuum port board attached to the vacuum outlet. Any of a large variety of quick disconnect mechanisms could be used between the two boards.

It is also possible to have the two boards integrated with one another and positioned on the gasket sheet in such a way that the vacuum port hole is in reasonably good alignment with the vacuum communication hole in the gasket sheet, and for that purpose, a shallow depression may be formed in the gasket sheet for the fitting of the pin board.

It may be possible to use the pin board by itself without the use of the gasket sheet, or the vacuum port board, because the advantageous mounting of the pin 24 is independent of the gasket sheet of the vacuum port board.

Also, in certain embodiments it is possible for the pin board to be rigid and inflexible when the vacuum blanket 18 is pushed up against its bottom surface during evacuation.

Of the locating pins 24, one could be held in a close tolerance opening in the pin board, while the others are loosely held as described with reference to Figure 2. In one particularly effective design, there are three pins in a triangular alignment arrangement, with two holes along one edge of the sheets and a third hole at an opposite edge.

## Claims

1. Vacuum frame means for holding in register two pieces of sheet material, for example, a photo mask and a photo film during photographic printing, comprising a board (26) having at least one aperture (25) for a pin, an aligning pin in the, or each, aperture, at least one pin having a body and a cap (29), and an elastomeric backing sheet (28) extending past the cap and aperture and being fastened to the surface of the board around the aperture for retaining the pin in the aperture, the pin being arranged for axial and lateral movement relative to the aperture.

2. Vacuum frame means as claimed in Claim 1 in which the cap is capable of lateral movement relative to the backing sheet.

3. Vacuum frame means as claimed in Claim 1 or Claim 2 including a supporting plate (31) attached to the backing sheet and in contact with the cap.

4. Vacuum frame means as claimed in Claim 1 or Claim 2 or Claim 3, in which the board (26) is flexible to conform to movement of the backing sheet during evacuation of air from the region around the board bounded by the surface of the backing sheet.

5. Vacuum frame means as claimed in Claim 1 or Claim 2 or Claim 3, in which the board (26) is rigid to resist deformation when pressure is applied to it.

6. Vacuum frame means as claimed in any of the preceding claims, including a vacuum port board (35) adapted to be placed adjacent the board (26), the vacuum port board including an aperture adapted to be in communication with an air evacuation system.

7. Vacuum frame means as claimed in any of the preceding claims, in which the exposed surface of the board - and of the vacuum port board if such is present - is slightly uneven to ease the flow of air from between adjacent surfaces of the board and the sheet material.

8. Vacuum frame means as claimed in any of the preceding claims including a gasket sheet (27) arranged to be applied against the elastomeric backing sheet and extending beyond the edges of the board and the backing sheet to be capable of sealing against one surface of a plate (14) when the board presses the sheet material against the plate.

9. Vacuum frame means as claimed in any preceding claim including a plate (14) against which the board can hold sheet material.

10. Vacuum frame means as claimed in Claim 9 including means for establishing a first vacuum chamber (41) between one side of the plate (14) and the facing side of the gasket sheet (27) and a second evacuated chamber around and below the gasket sheet (27).

11. Vacuum frame means as claimed in claim 6 in which grooves (37,38) in the board (26) and vacuum port board (35) are mated at the junction between the two boards in such as way that there is a clear air passage from the pins (24) in the board (26) to the aperture (36) in the vacuum port board (35).

**Revendications**

1. Moyen formant cadre sous vide pour maintenir alignés deux éléments formés d'un matériau en feuille, par exemple un masque photographique et un film photographique au cours d'un tirage photographique, moyen comportant un panneau (26) présentant au moins une ouverture (25) pour une goupille, une goupille d'alignement dans cette ouverture, ou dans chaque ouverture, au moins une goupille présentant un corps et un chapeau (29), et une feuille d'appui élastomère (28) s'étendant au-delà du chapeau et de l'ouverture et étant fixée à la surface du panneau tout autour de l'ouverture pour retenir la goupille dans l'ouverture, la goupille étant disposée pour pouvoir effectuer un mouvement axial et latéral par rapport à l'ouverture.

2. Moyen formant cadre sous vide comme revendiqué dans la revendication 1, dans lequel le chapeau peut effectuer un mouvement latéral par rapport à la feuille d'appui.

3. Moyen formant cadre sous vide comme revendiqué dans la revendication 1 ou la revendication 2, comportant une plaquette d'appui (31) attachée à la feuille d'appui et en contact avec le chapeau.

4. Moyen formant cadre sous vide comme revendiqué dans la revendication 1 ou la revendication 2 ou la revendication 3, dans lequel le panneau (16) est souple pour se conformer au mouvement de la feuille d'appui au cours de l'évacuation de l'air hors de la région située autour du panneau et limitée par la surface de la feuille d'appui.

5. Moyen formant cadre sous vide comme revendiqué dans la revendication 1 ou la revendication 2 ou la revendication 3, dans lequel le panneau (26) est rigide pour résister à la déformation lorsqu'on y applique une pression.

6. Moyen formant cadre sous vide comme revendiqué dans l'une quelconque des revendications précédentes, incluant un panneau à orifice de mise sous vide (35) conçu pour être placé adjacent au panneau (26), le panneau à orifice de mise sous vide présentant une ouverture conçue pour être mise en communication avec un système d'évacuation de l'air.

7. Moyen formant cadre sous vide comme revendiqué dans l'une quelconque des revendications précédentes, dans lequel la surface exposée du panneau - et du panneau à orifice de mise sous vide si un tel panneau est présent - est légèrement irrégulière pour faciliter le passage de l'air provenant d'entre les surfaces adjacentes du panneau et du matériau en feuille.

8. Moyen formant cadre sous vide comme revendiqué dans l'une quelconque des revendications précédentes, incluant une feuille de garniture (27) disposée pour s'appliquer contre la feuille d'appui élastomère et s'étendant au-delà des bords du panneau et de la feuille d'appui pour pouvoir assurer l'étanchéité à l'égard d'une surface de la plaque (14) lorsque le panneau presse le matériau en feuille contre la plaque.

9. Moyen formant cadre sous vide comme revendiqué dans l'une quelconque des revendications précédentes, incluant une plaque (14) contre laquelle le panneau peut maintenir le matériau en feuille.

10. Moyen formant cadre sous vide comme revendiqué dans la revendication 9, incluant des moyens pour établir une première chambre sous vide (41) entre l'une des faces de la plaque (14) et la face, qui lui fait face, de la feuille de garniture (27) ainsi qu'une seconde chambre mise sous vide autour et en dessous de la feuille de garniture (27).

11. Moyen formant cadre sous vide comme revendiqué dans la revendication 6, dans lequel des rainures (37,38) tracées dans le panneau (26) et dans le panneau à orifice de mise sous vide (35) sont associées à la jonction entre les deux panneaux de façon qu'il y ait un passage d'air libre entre les goupilles (24) qui sont dans le panneau (26) et l'ouverture (36) qui est dans le panneau à orifice de mise sous vide (35).

**Patentansprüche**

1. Vakuumrahmenelement zum ausgerichteten Halten zweier blattförmiger Stücke, zum Beispiel einer Photomaske und eines Photofilms, während des photographischen Kopierens, welches eine Tafel (26) mit zumindest einer Öffnung (25) für einen Stift, einen Ausrichtstift in der oder jeder Öffnung, zumindest einen Stift mit Stiftkörper und Kopf(29) sowie eine elastische Unterlage (28) umfaßt, die sich unterhalb des Kopfes und der Öffnung erstreckt und an der Tafelfläche um die Öffnung befestigt ist, um den Stift in der Öffnung zu halten, wobei der Stift zur axialen und seitlichen Bewegung in bezug auf die Öffnung angeordnet ist.

2. Vakuumrahmenelement nach Anspruch 1, wobei der Kopf in seitlicher Richtung in bezug auf die Unterlage bewegbar ist.

3. Vakuumrahmenelement nach Anspruch 1 oder Anspruch 2, welches eine Auflageplatte (31) enthält, die an der Unterlage befestigt und mit dem Kopf in Kontakt ist.

4. Vakuumrahmenelement nach Anspruch 1 oder Anspruch 2 oder Anspruch 3, wobei die Tafel (26) elastisch ist, um sich der Bewegung der Unterlage anzupassen, während Luft aus dem durch die Oberfläche der Unterlage begrenzten Bereich um die Tafel evakuiert wird.

5. Vakuumrahmenelement nach Anspruch 1 oder Anspruch 2 oder Anspruch 3, wobei die Tafel (26) starr ist, um gegen Verformung beständig zu sein, wenn auf sie Druck ausgeübt wird.

6. Vakuumrahmenelement nach einem der vorangehenden Ansprüche, welches eine Vakuumöffnungen tragende Tafel (35) enthält, die angrenzend an die Tafel (26) anordenbar ist, wobei die Vakuumöffnungen tragende Tafel eine Öffnung beinhaltet, die mit einem Luftevakuierungssystem verbunden werden kann.

7. Vakuumrahmenelement nach einem der vorangehenden Ansprüche, wobei die exponierte Oberfläche der Tafel - und, falls vorhanden, der Vakuumöffnungen tragenden Tafel - zur Erleichterung des Luftstroms zwischen den benachbarten Oberflächen der Tafel und des blattförmigen Materials leicht uneben ist.

8. Vakuumrahmenelement nach einem der vorangehenden Ansprüche, welches ein Dichtungsblatt (27) enthält, das gegen die elastische Unterlage angeordnet wird und sich über die Ränder der Tafel und der Unterlage erstreckt, so daß sie eine Fläche einer Platte (14) abdichten kann, wenn die Tafel das blattförmige Material gegen die Platte preßt.

9. Vakuumrahmenelement nach einem der vorangehenden Ansprüche, welches eine Platte (14) enthält, gegen welche die Tafel blattförmiges Material halten kann.

10. Vakuumrahmenelement nach Anspruch 9, welches Mittel zur Herstellung einer ersten Vakuumkammer (41) zwischen einer Seite der Platte (14) und der gegenüberliegenden Seite des Dichtungsblattes (27) und einer zweiten evakuierten Kammer um die und unterhalb des Dichtungsblattes (27) enthält.

11. Vakuumrahmenelement nach Anspruch 6, wobei Rillen (37,38) in der Tafel (26) und in der Vakuumdurchgangstafel (35) an der Verbindung zwischen den beiden Tafeln so aufeinandertreffen, daß ein freier Luftdurchgang von den Stiften (24) in der Tafel (26) zu der Öffnung (36) in der Vakuumöffnungen tragenden Tafel (35) entsteht.

Fig. 1.

Fig. 2.

Fig. 3.

FIG.4